# EUROPEAN PATENT APPLICATION

(11) **EP 3 567 551 A1**
(43) Date of publication of application: **13.11.2019**
(21) Application number: 18189967.5
(22) Date of filing: 21.08.2018
(51) Int. Cl.: G06T 7/60, A22B 5/00

(54) **METHOD OF ANALYZING THREE-DIMENSIONAL IMAGES FOR THE PURPOSE OF ANIMAL CARCASS ASSESSMENT**

(30) Priority: 10.05.2018 PL 42549618
(71) Applicant: Instytut Biotechnologii Przemyslu Rolno-Spozywczego im.prof. Waclawa Dabrowskiego, 02-532 Warszawa (PL); Taxus It Spólka Z Ograniczona Odpowiedzialnoscia, 02-491 Warszawa (PL); Waldi Zaklady Miesne Spólka Z Ograniczona Odpowiedzialnoscia Spólka Komandytowa, 62-065 Grodzisk Wielkopolski (PL); Uniwersytet Przyrodniczy w Poznaniu, 60-637 Poznan (PL)
(72) Inventor: Lisiak, Dariusz, 62-050 Baranówko (PL); Slósarz, Piotr Pawel, 64-553 Grzebienisko (PL); Strzelinski, Pawel, 61-517 Poznan (PL); Lapczynski, Rafal, 05-091 Zabki (PL)
(74) Representative: Suszczewicz, Romuald

(57) **Abstract**

A method of analyzing three dimensional image of animal (preferably pig) carcass in order to estimate the quality parameters of an animal carcass, such as meat content and weight of the carcass and its individual components, as well as the percentage of these components in the total weight, where the three-dimensional point cloud representing an animal half-carcass as seen from the outside (i.e. not from the cutting side) is analyzed, and the point cloud analyzed is used to determine the parameters describing the shape of the half-carcass. The three-dimensional image of the whole half-carcass from the outside is captured and created by means of an automatic device configured to capture spatial images and create a 3D point cloud from the captured image, for example by means of a laser scanner or optical laser or LIDAR or a depth camera or a Kinect system. The three-dimensional view of the whole half-carcass from the outside is captured and determined on the basis of carcasses with a temperature between 0 and 38 °C. The three-dimensional image is then be analyzed and the parameters obtained, used as independent variables, are used to derive regression equations for the determination of the commercial value of the carcass.

## Description

The subject of the present invention is a three-dimensional image analysis method for assessing animal carcasses, especially pork carcasses, whereby the parameters obtained from the analysis, serving as independent variables, are used to develop regression equations for determining the commercial value of carcasses.

The assessment of animal carcasses involves estimating the quality parameters of the carcass, such as, inter alia, meat content, weight of cuts such as: ham, loin, shoulder, flank, tenderloin, where a three-dimensional point cloud representing the half-carcass from the outside (i.e. not from the cut line) is analyzed, and the analyzed point cloud is used to determine the parameters describing the shape of the half-carcass.

Animal carcasses are normally hung on racks or, in the case of half-carcasses, on individual hooks in slaughterhouses and are either transported automatically or pushed manually to other areas. During this time, they are measured and evaluated. The three-dimensional image analysis method for the evaluation of the animal carcasses which is the subject of the present invention is primarily intended for pig carcasses but is also suitable for bovine, ovine, caprine or other slaughter animal carcasses.

In general, pig half-carcasses are weighed, graded and recorded at the end of the slaughter line. The assessment of pig half-carcasses is carried out according to the commercial classification system in force in a given country, e.g. for the carcass meat content in the EUROP system. Depending on the needs, other assessment parameters are also used, e.g. based on the weight of individual cuts. These systems use various manual or automatic classification devices that have undergone an appropriate test procedure in accordance with the requirements of the European Union. Known methods and equipment for assessing and grading pig carcasses are described below.

The patent description PCT/DE98/01926 teaches a method of assessing half-carcasses by optical image processing at the point of goods' entry, grading or exit from slaughterhouses and meat processing plants. The presented method is specifically designed for the assessment of pig half-carcasses but is also suitable for bovine, ovine, caprine and other large and small slaughter animals half-carcasses. The method involves optical image processing in which the separate optical color image of a part of the half-carcass, captured by an optical sensor, is fully automatically evaluated on the basis of electronic data processing. The disadvantage of this device is that meat content of half-carcasses is evaluated only on the basis of measurements of the lumbar area of the carcass.

The patent description DE 1673038 teaches the commercial grading of the animal carcass by measuring the thickness of the layers of fat and meat at legally defined needle-measuring points by means of an electro-optical method. The needle is inserted at a specific point in the half-carcass in order to determine the thickness of the layer of fat and meat at the same time. The disadvantage of this method is the low level of hygiene caused by driving the measuring needle into each carcass. Another disadvantage of this method is that meat structure is mechanically impaired. Yet another disadvantage of this method is its time-consuming nature.

The patent description DE OS 2728913 teaches the general use of mechanical-optical sensors for determining the fat or meat content of half-carcasses and their automatic processing by a computer in order to grade half-carcasses. To this end, half-carcasses, especially pig carcasses, are inspected optically and hams are inspected by means of image analysis. The grading result is then applied on the half-carcass by means of a laser.

The above method is mainly based on determining ham image parameters and is too expensive to be used in factories of all sizes.

The patent description EP 0029562 teaches a method of commercial grading of half-carcasses, which automatically determines the convex angle and the minimum thickness of the fat over the Musculus Gluteus Medius muscle. A video optical camera for capturing the image of pork half-carcasses and a computer are used for this purpose. The drawback of this method is that meat content is assessed solely on the basis of the parameters used to assess the hams.

The patent description DE 259346 teaches a method of grading half-carcasses by means of a camera which assesses the brightness of the lumbar region of half-carcasses by recording dark and light surfaces. This allows an approximate determination of the fat and meat content. The disadvantage of this method is that it is inaccurate and does not conform to the required grading standards.

The ZP method, which measures only the lumbar region of half-carcasses - the so-called two-point method - is a well-known and long-standing method for grading pig carcasses. This method measures meat content ratios, i.e. the thickness of the fat layer and of the meat, at two legally defined points. Measurements may be carried out manually using a scale or calipers, connected to a computer which calculates the meat content from a regression equation. The disadvantage of this method is that it is very time-consuming and inefficient, so it is used only in small plants.

The ultrasonic method is widely used to assess the meat content, whereby ultrasonic devices detect signals reflected by carcasses. A measuring head sends out ultrasonic waves of a certain frequency, which are reflected from the tissue layers and intercepted after reflection by the head. The device calculates the thickness of backfat and muscle at specific measurement points on the basis of differences in ultrasonic wave travel times. Signals are received and processed by scanning. The measurement is carried out when the ultrasonic head makes contact with a moist surface of the carcass. This method may be carried out by means of a manual device known as UltraFom, where the measurement is carried out by an operator who places the head in the legally defined position on the half-carcass. The disadvantage of this method is that the operator can make a mistake by placing the device in a wrong place or at a wrong angle.

The ultrasonic method was also used to construct an automatic device called AutoFom. The apparatus is used to estimate the meat content of pig carcasses and their main parts such as the ham, the loin, the shoulder and the belly. The method consists in ultrasonic scanning of whole carcasses with the use of 16 ultrasonic heads, placed in a semi-circular casing made of stainless steel. Measurements are taken at 5 mm intervals along the dorsal and lumbar part of the carcass. For proper measurement, it is important to maintain a constant slaughter line speed as carcasses move through the working area of the AutoFom. The disadvantage of the unit is the high cost and technical problems associated with its incorporation into the slaughter line.

The use of laser beams from a lidar camera for animal measurement is known from the invention application No. PCT/US99/20518. The application describes a system for three-dimensional measurement of phenotypic characteristics of animals, e.g. dairy cows. This system contains a large number of modulated laser beams with a lidar camera to measure approximately 100 points per square inch of the animal.

Each laser beam measures the horizontal, vertical and depth intensity dimension and, by combining the measurements, creates a very accurate three-dimensional image of the animal. The system calculates the desired phenotypic dimensions for animal compatibility by combining measurements at selected points in the animal. The system stores the dimensions of each animal in a computer database for later use. The system also stores an image of the light intensity of the animal's markings, which is compared to previously saved images. The disadvantage of this system is that it is designed for the measurement of live animals and not for the evaluation of animal carcasses, in particular for the evaluation of carcasses according to a commercial grading system.

The European patent No EP 2972071 teaches a device for measuring parts of slaughter animal carcasses, fitted with a video camera with a recording area of a video camera that can be used to optically record part of the surface of an element of the carcass of a slaughtered animal and in which the luminous intensities of the image points and their surface coordinates can be recorded, where the luminous intensities and the associated surface coordinates are provided in such a way that the luminous intensities can be transmitted as data; the device is equipped with an analysis unit, where the analysis unit is connected to a video camera and records the luminous intensities supplied by the video camera. The device is equipped with a depth camera with a depth camera recording area in which part of the surface of an element of the slaughter animal's carcass can be recorded, and in which spatial coordinates of the points of capture can be recorded, whereby the spatial coordinates are composed of surface coordinates and depth values, and in which the spatial coordinates are made available in such a way that they can be transmitted. The disadvantage of this system is that the internal image of the carcass is recorded and the parameters obtained are sensitive to the accuracy of the cut dividing the carcass into half-carcasses.

A device for volumetric measurement of an object in the body of an animal intended for slaughter is known from the application for patent No. PCT/DE2014/000123. The device has the first depth camera with the first depth camera recording area, the second depth camera with the second depth camera recording area and a positioning device to position the depth cameras in relation to each other. The device is fitted with an assessment unit. The analysis unit is connected to the depth cameras and acquires spatial coordinate data provided by the depth cameras. Spatial coordinate data from depth cameras can be combined as spatial coordinate data in a common spatial coordinate system. The surface model of the object in the body of the slaughtered animal is derived from combined spatial data coordinates, and the volume of the object in the body of the slaughtered animal is calculated from the surface model. The disadvantage of this system is that the internal image of the carcass is recorded and the parameters obtained are sensitive to the accuracy of the cut dividing the carcass into half-carcasses.

### Essence of the invention

A method of analyzing three-dimensional image for the purpose of assessing qualitative parameters of animal carcasses, such as meat content and weight of the carcass and its constituent parts and the relative share of those parts in the overall mass, whereby the scope of the analysis includes a three-dimensional cloud of points representing an animal half-carcass as seen from the inside (i.e. not from the cut line) and the analyzed cloud of points serves the purpose of determining parameters that describe the shape of the half-carcass, characterized in that the point cloud analysis is carried out in the following stages:
a) the first stage involves vertical and horizontal calibration of the analyzed three-dimensional cloud of points,
b) the second stage involves determining the location the waist (B1), the location of the maximum protuberance of the ham (B2) and the location of the maximum protuberance of the shoulder (B3),
c) the third stage involves standardizing the collected data for the purpose of obtaining a uniform density distribution of the cloud of points all over the surface of the half-carcass,
d) the fourth stage involves determining the cross-section points (PP) of the half-carcass in a horizontal plane at intervals ranging from 0.1cm to 5cm and matching them to the corresponding anatomical parts of the half-carcass, such as ham, shoulder or loin,
e) at the fifth stage, a convex hull of the cross-section points (PP), i.e. the smallest (inclusion-wise) convex polygon incorporating all cross-section points is determined for the cross section points determined in the fourth stage,
f) at the sixth stage, for each of the convex hulls defined in the fifth stage, the following parameters are determined: the surface area, the length of the circumference, the length of the longest segment of the convex hull, the width of the hull understood as the distance between the outermost points of the convex hull in the half-carcass cutting plane, as well as the depth of the hull understood as the distance between the outermost points of the convex hull in the vertical plane perpendicular to the half-carcass cutting plane,
g) at the seventh stage, the circle segments (F1) are fitted inside cross-section points (PP) determined at the fourth stage,
h) at the eighth stage, the radii of curvature of the cross-sections (PP) are determined as the radii of the fitted circles (F1),
i) at the ninth stage, the shape of the section is determined by calculating the distance between the cross section points and the fitted circle,
j) at the tenth stage the upper limit plane (I1) of the parameters of the analyzed half-carcass are set at the level of the cross-section with a diameter or width of less than 5 cm,
k) at the eleventh stage the lower limit plane (J1) of the analyzed half-carcass parameters are determined at a distance of 10 to 30 cm below the point of maximum protuberance of the shoulder (B3),
l) at the twelfth stage, the orthogonal projection of the point cloud on a vertical plane perpendicular to the carcass cutting plane is determined (RP),
m) at the thirteenth stage, the contour of the orthogonal projection determined in the twelfth stage is determined (ORP),
n) at the fourteenth stage, the protuberances of the ham (L1) are determined as the length of the sections joining the points of the contour (ORP) with the straight line joining the position of the waist (B1) to the upper limit plane (I1) of the analyzed parameters of the part of the half-carcass, determined at the tenth stage,
o) at the fifteenth stage, the vertical line of the belly (M1) between the ham and the shoulder is determined on the basis of the position of the points of the contour of the orthogonal projection (ORP) defined at the thirteenth stage,
p) at the sixteenth stage, the protuberances of the belly (N1) and the shoulder (N2) are determined as the distance between the points of contour of the orthogonal projection (ORP) determined at the thirteenth stage and the vertical line of the belly determined at the fifteenth stage,
q) at the seventeenth stage, the distances between the measurement points B1, B2 and B3 are determined,
r) at the eighteenth stage, a straight line P1 is determined linking the points of maximum protuberance of the ham to the point of maximum protuberance of the shoulder,
s) at the nineteenth stage, the outer protuberances of the half-carcasses R1 to R...n are determined at intervals of between 0.1cm and 5cm, as the distance between the points of contour of the orthogonal projection (ORP) and the straight line P1 as defined at the eighteen stage, as well as R_max as the greatest of all the outer protuberances,
t) at the twentieth stage, the volumes of ham and shoulder cuts and the central part of the half-carcass located between the ham and shoulder are determined.

The parameters described in stages one to twenty, serving as independent variables, are used to develop regression equations for determining the commercial value of carcasses. The qualities that are assessed in this way include *inter alia* meat content, weight of cuts such as: ham, loin, shoulder, flank, tenderloin and their relative share in the entire carcass, or other slaughter or breeding parameters of importance for processors or breeders. It is possible to assess the half-carcass at any stage of the production process, from the moment of cutting the carcass into two half-carcasses until its fragmentation into individual cuts.

Preferably, in the analyzed point cloud, the distance between points of the cloud is not less than 1 cm.

Preferably, at the seventh stage of the procedure, the circle segments (F1) are fitted to the cross-section points (PP) in such a way that the sum of the distances between the cross-section points and the circle to be fitted is minimized as far as possible, by selecting for this purpose an appropriate position and radius of the circle to be fitted.

A three-dimensional image of the whole half-carcass is preferably analyzed from the outside by means of a data-processing device, for example a computer.

The method according to the invention is specifically designed to be used for the assessment of pig carcasses.

The three-dimensional view of the whole half-carcass from the outside is created by means of an automatic device configured to capture spatial images and create a 3D point cloud from the collected image. Such devices include for example LIDAR, depth camera, Kinect system, laser scanner, optical scanner and others.

The device performs a three-dimensional scan of the half-carcass, for example by means of a laser scanner or an optical laser, and creates a three-dimensional point cloud which represents the half-carcass. On its basis, pursuant to the method according to the invention, parameters such as the radius of curvature, convexity and the cross-sectional area of the carcass are determined. In total, more than 1500 variables can be obtained from a single carcass. The selected traits are entered into a regression equation, on the basis of which the meat content of the half-carcass will be determined.

A regression equation for automated devices performing a three-dimensional half-carcass scan and forming a three-dimensional point cloud which represents a half-carcass may be developed by means of a regression analysis using the fractional method of the least squares (PLS), also known as a "latent image". Statistical calculations may be performed using the study by Danser D., Dumas G. et al. "Statystical Handbook for assessing pig classification methods". (2003).

The point cloud capturing device must be located at a distance from the half-carcass that allows the point cloud to be captured from the entire analyzed area of the half-carcass. The half-carcass must be suitably positioned in relation to the cloud capturing device, in accordance with the parameters of the device in question. The positioning of half-carcasses can be ensured for example by a simple railing system tailored individually to the slaughter line.

The three-dimensional point cloud represents the three-dimensional image of the whole half-carcass collected from the outside, which shall then be analyzed according to the method.

### Preferable features of the invention

The aim of the invention is to create a new way of analyzing a three-dimensional image for the purpose of evaluating animal carcasses. Using this method, the commercial value of the carcass can be assessed quickly and accurately. Carcass measurement is automatic and non-invasive and, consequently, does not reduce the value of the tested material. The advantage of the method according to the invention is that it can be used without the need for slaughter line modification, as the 3D imaging equipment is small in size and has low technical operation requirements. Another advantage of the method according to the invention is that the three-dimensional image of the half-carcass is analyzed from the outside (skin) and not from the inside (the plane of cutting of the carcass into half-carcasses), which eliminates the need to properly cut the carcass, which is a serious problem. In addition, the use of the shape of the whole carcass is most comparable to the visual assessment of the live animal by breeders who continue to use the animals' appearance for herd selection purposes. This method also allows for precise determination of such features as the size of commercial elements (cuts) of warm and chilled carcass without the need for its physical division.

### Key to the figures

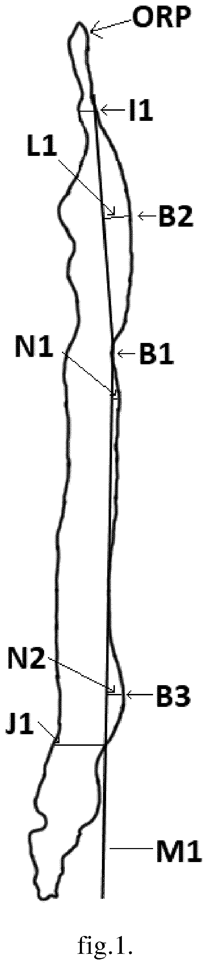

Figure 1 shows the location of the sections representing the protuberances of the ham, flank and shoulder and the points at which the maximum protuberances are located on the outline of the points of the orthogonal projection.

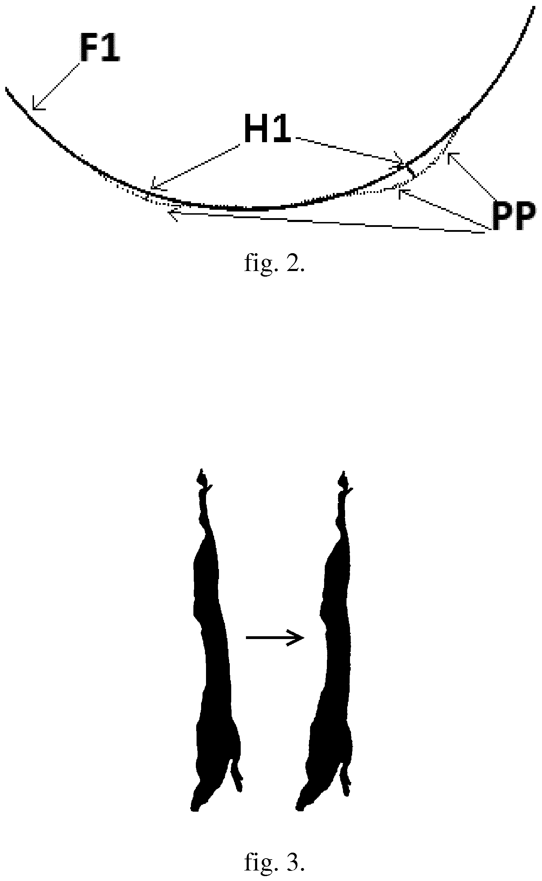

Figure 2 shows the points of the cross-section, the circle fitted to the points of the cross-section and the convexity of the cross-section shown as sections connecting the points of the cross-section with the fitted circle.
Figure 3 shows the method of calibrating the half-carcass in a vertical plane.

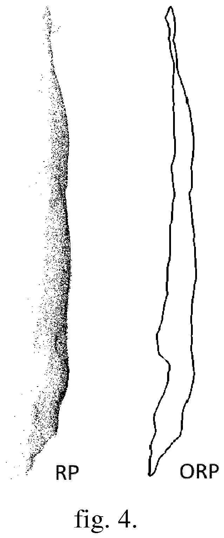

Figure 4 shows the rectangular projection of carcass points on a plane perpendicular to the cutting plane and the outline of the points' projection.

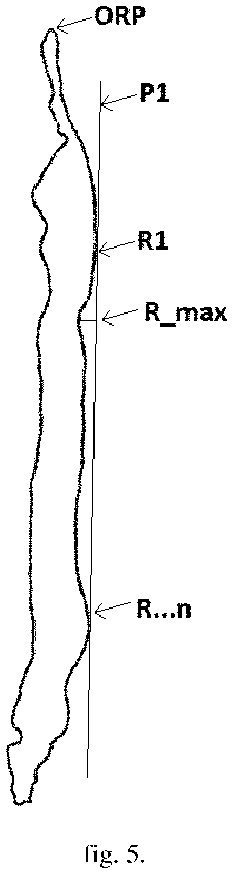

Figure 5 shows the outer protuberances of the half-carcass.

### EXAMPLE 1

A three-dimensional point cloud representing the half-carcass from the outside (rather than from the side of cutting) was collected from a warm pig carcass at 30 °C immediately after slaughter, using a Faro Focus 3D laser scanner, located at a distance of 2,1 m from the carcass,. The obtained point cloud is used to determine the parameters describing the shape of half-carcass. The point cloud analysis was as follows:
a) First, the analyzed points were rotated by 5° in a vertical plane perpendicular to the carcass cutting plane, and by 5.6° horizontally to calibrate the three-dimensional point cloud to be analyzed vertically and horizontally.
b) Then, the position of the waist (B1) was determined at a height of z = 73 cm above the plane of the scanner head's position, the position of the maximum protuberances of the ham (B2) and the shoulder (B3) were determined, at a height of z = 93 cm above and z = 11 cm below the plane of the scanner head's position, respectively.
c) Then, the collected data were standardized to obtain a homogeneous distribution of the density of the point cloud over the entire area of the half-carcass, assuming a value of 1 cm as the distance between the standardized points.
d) Then, the horizontal cross-section points (PP) of the half-carcass were determined and attributed to the respective anatomical parts of the half-carcass by assigning 53 cross-sections to the ham, 50 cross-sections to the loins and 50 cross-sections to the shoulder.
e) Then, a convex hull of the cross-section points (PP), i.e. the smallest (inclusion-wise) convex polygon incorporating all cross-section points was determined for the cross section points determined in the fourth stage.
f) Then, for each of the convex hulls defined in the fifth stage, the following parameters were determined: the surface area, the length of the circumference, the length of the longest segment of the convex hull, the width of the hull understood as the distance between the outermost points of the convex hull in the half-carcass cutting plane, as well as the depth of the hull understood as the distance between the outermost points of the convex hull in the vertical plane perpendicular to the half-carcass cutting plane. For the cross-section at the height of the waist, the cross-sectional area was calculated, which amounted to P = 426.7 cm², as well as the circumference length (L = 83.3 cm), the width (D = 34.4 cm), the depth (H = 16.3 cm) and the length of the longest section of the convex hull including the cross-section points (C = 30.8 cm).
g) Then, circles were fitted into designated cross-sections.
h) Then, the radii of curvature of the cross-sections were determined as the radii of the fitted circles; by way of example, a circle with a radius of 17.2 cm was fitted for the cross-section at the waist level.
i) Then, the shapes of the cross sections were then determined by calculating the distance between cross section points and the fitted circle, with the loin convexity (H1) of 0.5 cm at the mid-height of the half-carcass.
j) Then, the plane of the upper limit of the analyzed part of the half-carcass was determined at the level of the cross section of less than 5 cm in diameter and at a height of z = 125 cm above the level of the scanner head.
k) Then, the plane of the lower limit of the analyzed part of the half-carcass was determined 20 cm below the point of maximum shoulder protuberance.
l) Then, the orthogonal projection of the point cloud on a vertical plane perpendicular to the carcass cutting plane was then determined.
m) Then, the outline of this orthogonal projection of the point cloud on a vertical plane perpendicular to the carcass cutting plane was determined.
n) Then, the convexity of the ham (L1) was determined as the distance of the contour points (ORP) from the straight line connecting the point of the waist position (B1) with the previously determined point of the upper limit of the examined parameters, with the highest value of the convexity amounting to h_max = 3.1 cm.
o) Then, the vertical line of the protuberance of the belly (M1) between the ham and the shoulder was determined from the position of the points of the previously defined outline of the perpendicular projection of the point cloud in a vertical plane perpendicular to the carcass cutting plane.
p) Then, the protuberances of the belly (N1) and the shoulder (N2) were determined as the distance of points of the previously determined contour of the perpendicular projection of the point cloud on a vertical plane, perpendicular to the carcass cutting plane, from the previously determined vertical line of the belly, with the maximum protuberance being b_max = 2.5 cm for the belly, and s_max = 1.5 cm for the shoulder.
q) Then, the distances between the measuring points were determined, including the distance between the maximum protuberance of the ham and the maximum protuberance of the shoulder (d1=105 cm), and the distance between the waist and the plane of the upper limit of the ham (d2=52 cm).
r) Then, the straight line joining the maximum protuberances of the ham and shoulder was determined.
s) Then, the external protuberances were determined as the distance of points of the orthogonal projection outline to the P1 line, with the maximum convexity being 1.75 cm.
t) Then, the volumes of ham, loin and shoulder were determined, with the volume of ham being 5.75dm3.

On the basis of the determined parameters, meat content was calculated at m=58%. The analysis was carried out using a computer.

### EXAMPLE 2

A pork half-carcass was scanned at a temperature of 7°C using Kinect system (a depth sensor). The system works on the principle of measuring distance using structural light. An IR radiator displays a cloud of points in front of the camera, the positions of which are recorded by the depth camera with infrared filter. The sensor was located at a distance of 1,9 m from the half-carcass. The skin side of the half-carcass (and not the cut side) was scanned. The result was stored in an OBJ file from which the point cloud was then extracted. The obtained data set was used to determine the shape parameters.
The point cloud analysis was as follows:
a) First, the analyzed points were rotated by 14.8° in a vertical plane perpendicular to the carcass cutting plane, and by 25.5° horizontally to calibrate the three-dimensional point cloud to be analyzed vertically and horizontally.
b) Then, the position of the waist (B1) was determined at a height of z = 45 cm above the plane of the scanner head's position, the position of the maximum protuberances of the ham (B2) and the shoulder (B3) were determined, at a height of z = 61 cm above and z = 29 cm below the plane of the scanner head's position, respectively.
c) Then, the collected data were standardized to obtain a homogeneous distribution of the density of the point cloud over the entire area of the half-carcass, assuming a value of 0.8 cm as the distance between the standardized points.
d) The points of horizontal cross-section (PP) of the half-carcass were then determined with a spacing of 1.0 cm and attributed to the ham, loin and shoulder respectively, with 15 to more than 60 points being assigned to each cross-section.
e) Then, a convex hull of the cross-section points (PP), i.e. the smallest (inclusion-wise) convex polygon incorporating all cross-section points was determined for the cross section points.
f) Then, for each of the convex hulls defined previously, the following parameters were determined: the surface area, the length of the circumference, the length of the longest segment of the convex hull, the width of the hull understood as the distance between the outermost points of the convex hull in the half-carcass cutting plane, as well as the depth of the hull understood as the distance between the outermost points of the convex hull in the vertical plane perpendicular to the half-carcass cutting plane. For the cross-section at the height of the waist, the cross-sectional area was calculated, which amounted to P = 339.4 cm², as well as the circumference length (L = 75.4 cm), the width (D = 29.0 cm), the depth (H = 14.6 cm) and the length of the longest section of the convex hull including the cross-section points (C = 28.5 cm).
g) Then, circles were fitted into designated cross-sections, so as to minimize the total distance between the cross-sectional points and the fitted circle.
h) Then, the radii of curvature of the cross-sections were determined as the radii of the fitted circles; by way of example, a circle with a radius of 14.6 cm was fitted for the cross-section at the waist level.
i) Then, the shapes of the cross sections were then determined by calculating the distance between cross section points and the fitted circle, with the maximum distance of the points from the fitted circle (H1) at the level of maximum ham convexity was 0.8 cm.
j) Then, the plane of the upper limit of the analyzed part of the half-carcass was determined at the level of the cross section of less than 5 cm in diameter and at a height of z = 103 cm above the level of the depth camera.
k) Then, the plane of the lower limit of the analyzed part of the half-carcass was determined 20 cm below the point of maximum shoulder protuberance.
l) Then, the orthogonal projection of the point cloud on a vertical plane perpendicular to the carcass cutting plane was then determined.
m) Then, the outline of this orthogonal projection of the point cloud on a vertical plane perpendicular to the carcass cutting plane was determined.
n) Then, the convexity of the ham (L1) was determined as the distance of the contour points (ORP) from the straight line connecting the point of the waist position (B1) with the previously determined point of the upper limit of the examined parameters, with the highest value of the convexity amounting to h_max = 2.5 cm.
o) Then, the vertical line of the protuberance of the belly (M1) between the ham and the shoulder was determined from the position of the points of the previously defined outline of the perpendicular projection of the point cloud in a vertical plane perpendicular to the carcass cutting plane.
p) Then, the protuberances of the belly (N1) and the shoulder (N2) were determined as the distance of points of the previously determined contour of the perpendicular projection of the point cloud on a vertical plane, perpendicular to the carcass cutting plane, from the previously determined vertical line of the belly, with the maximum protuberance being b_max = 1.4 cm for the belly, and s_max = 2.9 cm for the shoulder.
q) Then, the distances between the measuring points were determined, including the distance between the maximum protuberance of the ham and the maximum protuberance of the shoulder (d1=97.4 cm), and the distance between the waist and the upper limit of the ham (d3=17.5cm).
r) Then, the straight line joining the maximum protuberances of the ham and shoulder was determined.
s) Then, the external protuberances were determined as the distance of points of the orthogonal projection outline to the PI line, with the maximum convexity being 1.89 cm.
t) Then, the volumes of ham, loin and shoulder were determined, with the volume of shoulder being 4.8dm³.

On the basis of the determined parameters, meat content was calculated at m=54.8%. The analysis was carried out using a computer.

## Claims

1. A method of analyzing three-dimensional image for the purpose of assessing qualitative parameters of animal carcasses, such as meat content and weight of the carcass and its constituent parts and the relative share of those parts in the overall mass, whereby the scope of the analysis includes a three-dimensional cloud of points representing an animal half-carcass as seen from the outside (i.e. not from the cutting side) and the analyzed cloud of points serves the purpose of determining parameters that describe the shape of the half-carcass, **characterized in that**:
a) the first stage involves vertical and horizontal calibration of the analyzed three-dimensional cloud of points,
b) the second stage involves determining the location of the waist (B1), the location of the maximum protuberance of the ham (B2) and the location of the maximum protuberance of the shoulder (B3),
c) the third stage involves standardizing the collected data for the purpose of obtaining a uniform density distribution of the cloud of points all over the surface of the half-carcass,
d) the fourth stage involves determining the cross-section points (PP) of the half-carcass in a horizontal plane at intervals ranging from 0.1cm to 5cm and matching them to the corresponding anatomical parts of the half-carcass, such as ham, shoulder or loin,
e) at the fifth stage, a convex hull of the cross-section points (PP), i.e. the smallest (inclusion-wise) convex polygon incorporating all cross-section points is determined for the cross section points determined in the fourth stage,
f) at the sixth stage, for each of the convex hulls defined in the fifth stage, the following parameters are determined: the surface area, the length of the circumference, the length of the longest segment of the convex hull, the width of the hull understood as the distance between the outermost points of the convex hull in the half-carcass cutting plane, as well as the depth of the hull understood as the distance between the outermost points of the convex hull in the vertical plane perpendicular to the half-carcass cutting plane,
g) at the seventh stage, the circle segments (F1) are fitted inside cross-section points (PP) determined at the fourth stage,
h) at the eighth stage, the radii of curvature of the cross-sections (PP) are determined as the radii of the fitted circles (F1),
i) at the ninth stage, the shape of the section is determined by calculating the distance between the cross section points and the fitted circle,
j) at the tenth stage the upper limit plane (I1) of the parameters of the analyzed half-carcass are set at the level of the cross-section with a diameter or width of less than 5 cm,
k) at the eleventh stage the lower limit plane (J1) of the analyzed half-carcass parameters are determined at a distance of 10 to 30 cm below the point of maximum protuberance of the shoulder (B3),
l) at the twelfth stage, the orthogonal projection of the point cloud on a vertical plane perpendicular to the carcass cutting plane is determined (RP),
m) at the thirteenth stage, the contour of the orthogonal projection determined in the twelfth stage is determined (ORP),
n) at the fourteenth stage, the protuberances of the ham (L1) are determined as the length of the sections joining the points of the contour (ORP) with the straight line joining the position of the waist (B1) to the upper limit plane (I1) of the analyzed parameters of the part of the half-carcass, determined at the tenth stage,
o) at the fifteenth stage, the vertical line of the belly (M1) between the ham and the shoulder is determined on the basis of the position of the points of the contour of the orthogonal projection (ORP) defined at the thirteenth stage,
p) at the sixteenth stage, the protuberances of the belly (N1) and the shoulder (N2) are determined as the distance between the points of contour of the orthogonal projection (ORP) determined at the thirteenth stage and the vertical line of the belly determined at the fifteenth stage,
q) at the seventeenth stage, the distances between the measurement points B1, B2 and B3 are determined,
r) at the eighteenth stage, a straight line P1 is determined linking the points of maximum protuberance of the ham to the point of maximum protuberance of the shoulder,
s) at the nineteenth stage, the outer protuberances of the half-carcasses R1 to R...n are determined at intervals of between 0.1cm and 5cm, as the distance between the points of contour of the orthogonal projection (ORP) and the straight line P1 as defined at the eighteen stage, as well as R_max as the greatest of all the outer protuberances,
t) at the twentieth stage, the volumes of ham and shoulder cuts and the central part of the half-carcass located between the ham and shoulder are determined.

2. The method according to claim 1, **characterized in that** in the analyzed point cloud the distance between points of the cloud is not less than 1 cm.

3. The method according to claim 1 or 2 **characterized in that** at the seventh stage of the procedure, the segments of circles (F1) are fitted to the cross-section points (PP) in such a way that the sum of the distances between the cross-section points and the circle to be fitted is as small as possible, by appropriately selecting for that purpose the position and the radius of the circle to be fitted.

4. The method according to claims 1 to 3, **characterized in that** the analysis is carried out by means of a data processing device, for instance a computer.

5. The method according to claims 1 to 3, **characterized in that** before the first stage, the three-dimensional image of the whole half-carcass on the outside is captured and rendered by means of an automatic device configured to capture spatial images and create a 3D point cloud from the captured image, for example a laser scanner or optical laser or LIDAR or a depth camera or a Kinect system.

6. The method according to claim 5, **characterized in that** the three-dimensional image of the whole half-carcass on the outside is captured and rendered on the basis of carcass at a temperature from 0° to 38° C.

7. The method according to claims 1 to 6, **characterized in that** the subject of the analysis is a three-dimensional image of a pork half-carcass.
